# EUROPEAN PATENT APPLICATION

(11) **EP 0 881 851 A1**
(43) Date of publication of application: **02.12.1998**
(21) Application number: 97201570.5
(22) Date of filing: 28.05.1997
(51) Int. Cl.: H04Q 7/38, H04Q 7/22

(54) **Selective call transfer to a cellular and/or cordless radio communication terminal**

(71) Applicant: TELEFONAKTIEBOLAGET L M ERICSSON (publ), 126 25 Stockholm (SE)
(72) Inventor: van Soest, Henricus Ignatius Paulus, 2265 Bj Leidschendam (NL)
(74) Representative: Dohmen, Johannes Maria Gerardus

(57) **Abstract**

A method and equipment of selective call transfer to a cellular and/or cordless radio communication terminal (41) within the range of a cellular and/or cordless radio base station (10) wherein a selective call transfer status is assigned to the radio base station (10). Communication between the radio base station (10) and the radio communication terminal (4) is provided in accordance with the selective call transfer status assigned to the radio base station (10). The selective call transfer status may comprises any or a plurality of blocking all calls to the radio communication terminal (4); blocking all calls from the radio communication terminal (4); switching calls for the radio communication terminal (4) to voice mail; disable audible call alert signalling for the radio communication terminal (4); enable non-audible call alert signalling for the radio communication terminal (4).

## Description

### Field of the Invention

The present invention relates generally to cellular and/or cordless radio telecommunication systems and, more particularly, to a method and equipment for providing radio communication between a radio base station and a radio communication terminal of a cellular and/or cordless radio telecommunication system.

### Background of the Invention

Cordless radio telecommunication systems, such as operating in accordance with the Digital Enhanced Cordless Telecommunications (DECT) or the Personal Handyphone System (PHS) standard, and micro-cell cellular mobile radio communication systems operating in accordance with the Global System for Mobile Communication (GSM) standard (including DCS 1800 and PCS 1900), for example, comprise a plurality of radio access units or radio base stations, each providing service to a relatively small area, generally having a radius from 10-100 m indoor and uptill 5000 m for outdoor usage. In GSM even larger service areas are envisaged, having outdoor radii from 5000 m uptill 35 km, for example.

The radio base stations operatively connect to a central interface unit, called radio exchange in DECT and mobile services switching center in GSM, for example. The central interface unit connects to a Private Automatic Branch eXchange (PABX), a Public Switched Telephone Network (PSTN) or an Integrated Services Digital Network (ISDN), for example.

Between the radio base stations and remote radio communication terminals, such as a portable radio telephone, a duplex radio link can be established. While moving across the coverage or service area of the radio telecommunication system, such a radio link is handed over from one radio base station to another whenever the radio communication terminal leaves the coverage area of a particular radio base station.

According to the GSM protocol, a radio communication terminal is registered as being in the communication range or reach of a particular radio base station, whenever a registration procedure between the radio base station and the radio communication terminal is executed.

In the DECT-system, no such registration procedure is performed. A radio communication terminal permanently "listens" to radio base stations, and locks with such radio base station from which the strongest RF transmission signal is received. A radio communication link between the radio communication terminal and the particular radio base station is established after receiving a paging signal from the radio base station by the radio communication terminal or after a call request from the terminal itself. In either case, the radio communication terminal is in control of the radio link connection.

With the present success of mobile and/or cordless radio communication all over the world, some problems are spotted with regard to the use of mobile and/or cordless radio telephones, and the like.

In Italy and France, for example, where there is a very high penetration of mobile telephones and which are very frequently used, it is already known that in restaurants, bars and other like places where a quiet and cosy atmosphere is to be maintained, the use of mobile and/or cordless radio telephones is forbidden. Some owners of such establishments do not only require that the mobile phones will be switched off, but they even go that far in demanding that the portable or mobile radio telephones have to be temporarily handed over at the reception desk or the like. Both, for the owner of the restaurant and the mobile telephone, this is not a preferred and/or satisfactory solution.

Further, imagine to be in a concert hall. The orchestra is just playing a very fine and soft piece of music when an audible call alert signal of a mobile telephone sounds. It will be appreciated that this is annoying for the public as well as the owner of the radio telephone, which apparently did not switched off his mobile phone.

A possible solution is to provide a type of switching gate for switching off mobile phones or in general mobile and/or cordless radio communication equipment at the entrance of places where the use of such equipment is not appreciated. Although this may prevent the annoying situation as illustrated above with respect to the concert hall, it does not prevent users from switching on their equipment once they have passed the switching gate.

Another solution would be the provision of a distorting RF signal, such that no calls can be made or received by radio communication terminal equipment in a certain area. However, for the use of such distortion equipment licences are required, whereas from a technical point of view a rather large RF frequency band has to be distorted, with the risk that other equipment will be unintentionally distorted too.

### Summary of the Invention

Accordingly, it is an object of the present invention to provide a method and equipment for providing cellular and/or cordless radio communication in a certain service area in accordance with specific communication requirements set for such an area, for example a restaurant, a concert hall, a museum and the like. That is, for such an area a selective usage of the radio equipment has to be provided, as appropriate for that particular area.

These and other objects and advantages are achieved by the present invention through a method of selective call transfer to a cellular and/or cordless radio communication terminal within the range of a cellular and/or cordless radio base station, said method comprising the steps of:
a) assigning a selective call transfer status to the radio base station, and
b) providing communication between the radio base station and the radio communication terminal in accordance with the selective call transfer status assigned to the radio base station.

The invention is based on the above-disclosed system aspect, in that a cellular and/or cordless radio communication terminal is always in communication with a radio base station in the service area of which the radio communication terminal is operating. Different from providing special equipment such as switching gates, distortion transmitters or impopular measures like demands to hand over radio communication terminals, with the method according to the invention, the required communication mode in a certain area is imposed on mobile radio equipment via a radio base station providing radio coverage to the particular area, which radio base station having assigned to it a so-called selective call transfer status or mode.

That is, communication performed between the radio base station and a radio communication terminal in the service area of the radio base station is subjected to this selective call transfer status.

The type of call transfer status imposed on a mobile and/or cordless radio communication terminal may comprise, in accordance with the present invention, any or a plurality of:
- blocking all calls to said radio communication terminal;
- blocking all calls from said radio communication terminal;
- switching calls for said radio communication terminal to voice mail;
- disable audible call alert signalling for said radio communication terminal;
- enable non-audible call alert signalling for said radio communication terminal.

In a restaurant, where neither calls may be received or placed, the selective call transfer status may comprise blocking of all calls from and to the radio communication terminal. This, if desired, in connection with the switching of incoming calls to a voice mail service, for example the Short Message Service (SMS) of a GSM network. With SMS messages can be stored in either the mobile services switching center or the PSTN/ISDN to which such switching center is connected and messages can be stored in a Subscriber Identity Module (SIM) of the mobile terminal. In the case of a concert hall, one may decide to allow the receipt, by the terminal, of written messages however not being alerted by an audible call alert signalling but, if available, a non-audible call alerting using vibratory or visual means, for example.

In a yet further embodiment of the invention, the use of such a selective call transfer status may be temporarily imposed, for example during certain hours of a day, or may be provided on an operator dependent basis or a subscription type basis. That is, such selective call transfer may be provided as a special service from an operator, with the possibility that all subscribers of said operator are affected by such service or only after a subscription to the service, for example.

In operation, the selective call transfer status for a particular subscriber may be assigned at each new call to a subscriber in the range of the radio base station, or the first that time a radio communication terminal connects to the particular radio base station. In a GSM network, this will be at the registration procedure when the terminal becomes in the range of the radio base station, whereas in DECT, for example, this will be at the first active call between the radio base station and the radio communication terminal. However, in DECT, a general selective call transfer status, that is a call transfer status applicable to all radio communication terminals in de service area of the radio base station, can be added to the so-called control data field which is transmitted in each time-slot of a DECT-time frame. It is the control date which are used by the radio communication terminal to listen and to lock to a particular radio base station.

In a preferred embodiment of the invention, the selective call transfer status is assigned for either one or both a radio base station and radio communication terminal in a mobile or radio switching equipment or center to which the radio base station connects. Those skilled in the art will appreciate that the present invention does not or hardly require changes in the hardware or software of a radio communication terminal.

The invention relates further to a radio base station for use in a cellular and/or cordless radio telecommunication system comprising a plurality of cellular and/or cordless radio communication terminals, the radio base station comprising transceiver means and communication control means, wherein the control means are arranged to execute communications between the radio base station and a radio communication terminal in accordance with the or part of a selective call transfer status assigned to the radio base station.

Dependent on the type of selective call transfer status, for example in the case of a general blocking of all outgoing calls from the radio base station, it will be appreciated that such a radio base station can be a very simple embodiment of an existing radio base station, merely comprising radio base station transceiver means and a simple radio base station controller, basically providing layer 1 and layer 2 services in accordance with the GSM protocol structure, for example.

Further, switching equipment is provided, for use with a cellular and/or cordless radio telecommunication system for the connection of radio base stations for radio communication with cellular and/or cordless radio telecommunication terminals, wherein the switching equipment is arranged to execute communications via the switching equipment a radio base station and radio communication terminal in accordance with the or part of a selective call transfer status assigned to the radio base station.

The above-mentioned and other features and advantages of the invention are illustrated in the following description, with reference to the enclosed drawings.

### Brief Description of the Drawings

Fig. 1 shows, in a schematic and illustrative manner, a cordless and/or cellular radio telecommunication system operating in accordance with the present invention.

Fig. 2 shows, in a schematic and illustrative manner, a cellular GSM radio telecommunication system, arranged for operating in accordance with the present invention.

### Detailed Description of the Embodiments

Without the intention of limitation, the invention will now be explained by its application in a cordless and cellular digital radio telephone system, such as operating in accordance with the Digital Enhanced Cordless Telecommunications (DECT) standard and/or the Global System for Mobile communication (GSM) standard.

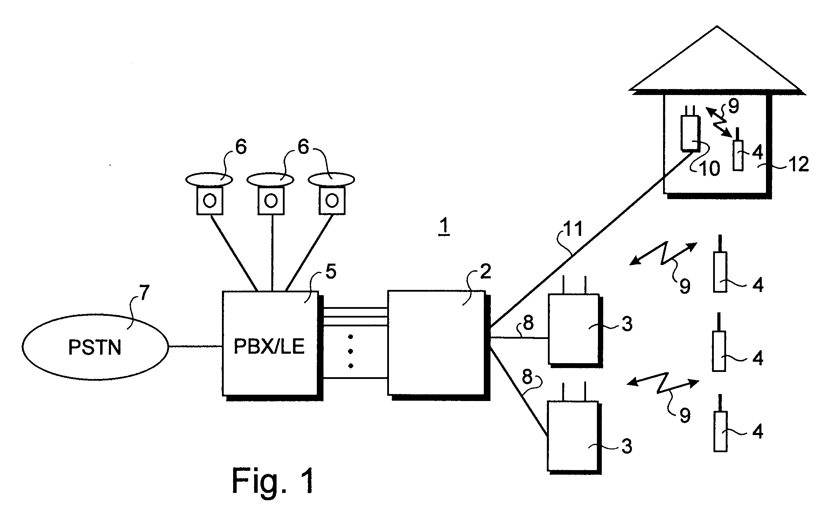

Fig. 1 illustrates a typical cordless or cellular radio communication system, generally designated with reference numeral 1. The system comprises three essential elements: a central interface unit 2, called Radio Exchange (RE) in a cordless radio telecommunication system and called Mobile services Switching Centre (MSC) in a cellular GSM network; a plurality of compact radio access units or radio base stations 3, which are installed throughout the area to be covered and connect directly to the central interface unit 2, and remote cellular and/or cordless radio communication terminals in the form of mobile or portable telephones or handsets 4, which connect over a radio link 9 to the radio base stations 3.

Each radio base station 3 provides service to a given area, called a cell, which is surrounded and/or overlapped by other cells of other radio base stations 3, i.e. a so-called multi-cell approach. The radius of indoor cells typically amounts from 10 m-100 m for cordless and micro-cell cellular radio communication systems, whereas the radius of outdoor cells typically ranges from 200 m up to 5000 m, and even 35 km for macro-cell cellular networks.

The central interface unit 2 is connected to a wired exchange 5, to which a plurality of wired telephones 6 can be connected. In business environments, this exchange 5 is generally a Private Branch eXchange (PBX) whereas in outdoor applications, such as Cordless Terminal Mobility (CTM) or GSM the exchange 5 is generally a Local Exchange (LE) which, like the PBX, is connected to a Public Switched Telephone Network (PSTN) 7, i.e. the ordinary wired public telephone network.

In cellular networks, the central interface unit 2 may connect directly to the wired network 7, which may also be an Integrated Service Digital Network (ISDM).

The radio base stations 3 connect via wires 8 to the central interface unit 2. Although wires 8 are shown in fig. 1, this connection can also be provided by a directional radio link, optical fiber and the like.

In a normal operation mode, the radio communication terminals 4 may place and receive calls within the service area of the radio base stations 3, in accordance with the access rights acquired from an operator of the radio communication system 1. The radio communication terminals 4 may move from one radio base station 3 to another without interruption of a call in progress.

For the purpose of explanation of the present invention, it is now assumed that in building 12 an area has to be provided with a restricted or selective usage of radio communication terminals, such as mobile or portable radio telephones.

In accordance with the present invention, a radio base station 10 is provided in the respective area of the building 12, which radio base station 10 operates at the air interface 9 like the radio base stations 3. That is, in the case of a radio communication system operating in accordance with the DECT standard, the radio base station 10 operates at its air interface following the DECT standard, whereas in the case of a GSM system for example, the radio base station 10 operates, like the base stations 3, following the relevant GSM air interface protocol across the so-called Um interface.

The radio base station 10 connects via a line 11 to the central interface unit 2, which line 11 may be a wired line, including a wired line via the wired telephone network 7, for example.

The service area or Radio Frequency (RF) range of the radio base station 10 is preferably limited to the area for which a selective call transfer is to be established. However, the RF signal provided by the radio base station 10 has to be such that, in the case of cellular radio communication terminals, for example, a terminal 4 when in the service area of the radio base station 10 will register itself at the radio base station 10. In the case of a DECT radio communication system, the RF signal strength of the radio base station 10 has to provide the highest Radio Signal Strength Indication (RSSI) at the radio communication terminal 4, such that the radio communication terminal 4 will lock itself to the radio base station 10.

In accordance with the present invention, there is assigned to the radio base station 10 a selective call transfer status, for example the blocking of all calls to a radio communication terminal 4 in the service area of the radio base station 10. That is, for the radio communication network the position of the terminal 4 is known, however calls to the terminal 4 will not be transferred due to the selective call transfer status of the radio base station 10. Calls which are not received by the radio communication terminal 4 may be transferred to a voice mail service or, if available, processed by a Short Message Service (SMS) active in GSM networks, for example.

In a less stringent call transfer status or mode, audible call alert signalling to a radio communication terminal 4 in the service area of the radio base station 10 may be switched off, while other call alerts such as vibratory or optical alerts may be allowable. Or in an even more stringent application, a complete blocking of calls to and from the radio communication terminals 4 in the building 12 can be imposed.

Those skilled in the art will appreciate that, using existing access rights in a radio telecommunication network, the selective call transfer status imposed on a radio communication terminal 4 by a radio base station 10 can be made operator dependent and/or subscriber dependent. In such cases, the identity of the terminal 4 has to be established for assigning the required status. Further, a selective call transfer status may be temporarily assigned, for example during certain hours of the day or days of the week etc.

In the simplest mode of operation, wherein all terminals 4 in the range of the radio base station 10 have to be assigned a particular call transfer status, for example blocking of all calls, such as in restaurants, the radio base station 10 can be of a very elementary type, not requiring all the components and software for providing a full operational communication service.

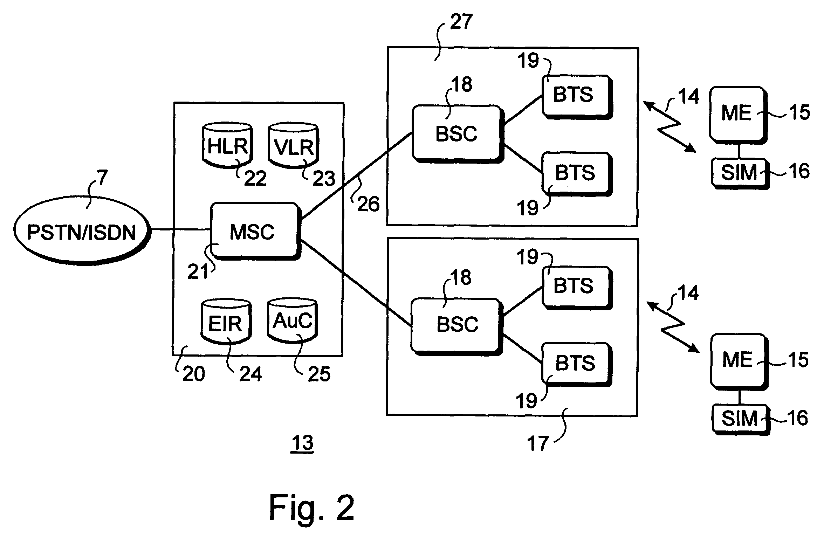

Fig. 2 shows the architecture of a GSM network 13, composed of several functional entities, whose functions and interfaces are specified. The GSM network can be divided into three general parts. The radio communication terminal or Mobile Equipment (ME) 15 with its Subscriber Identity Module (SIM) card 16 are carried by the subscriber. The radio base station subsystem 17 controls the radio link 14 or Um interface with the mobile equipment 15. The main part of the radio base station subsystem 17 is formed by a Base Station Controller (BSC) 18 and Base Transceiver Stations (BTSs) 19 which connect to the BSC 18.

A further major part of the GSM network 13 is the network subsystem 20, comprising the Mobile services Switching Center (MSC) 21, which performs the switching of calls between the radio base stations subsystem 17 and the PSTN/ISDN 7.

The network subsystem 20 further comprises a Home Location Register (HLR) 22 and a Visitor Location Register (VLR) 23 which, together with the MSC 21, provide the call-routing and roaming capabilities of the GSM network 13. The HLR 22 contains all the administrative information of each subscriber registered in the corresponding GSM network, along with the current location of the mobile equipment 15.

The VLR 23 contains selected administrative information from the HLR 22, necessary for call control and provision of the subscriber services for each mobile currently located in the geographically area controlled by the VLR 23.

For authentication and security purposes, an Equipment Identity Register (EIR) 24 and an Authentication Center (AuC) 25 are provided in the network subsystem 20. The EIR 24 is a database that contains a list of valid mobile equipment on the network and the AuC 25 is a protected base that stores a copy of the secret key stored in each subscriber's SIM card 16. The MSC 21 connects to the BSC 18 via a so-called A-interface 26.

In accordance with the present invention, the selective call transfer status of a radio base station 27 may be contained in the HLR 22 and, if applicable in the VLR 23. Mobile equipment 15 which registers itself at the radio base station 27 will be provided a selective call status in accordance with the selective call transfer status assigned to the radio base station 27. Preferably, the call transfer status is assigned once the mobile equipment 15 registers with the radio base station 27. The BSC 18 of the radio base station 27 is arranged such to operate in accordance with the assigned selective call transfer status.

Alternatively, the selective call transfer status of a radio base station 27 may also, or in addition, stored in its BSC 18, which ever is the most appropriate for a particular network.

It will be appreciated by those skilled in the art that the present invention can be modified and enhanced, however without deviation from the novel and inventive features of the present invention as defined in the appended claims.

## Claims

1. A method of selective call transfer to a cellular and/or cordless radio communication terminal within the range of a cellular and/or cordless radio base station, said method comprising the steps of:
a) assigning a selective call transfer status to said radio base station, and
b) providing communication between said radio base station and said radio communication terminal in accordance with said selective call transfer status assigned to said radio base station.

2. A method according to claim 1, wherein said selective call transfer status comprises any or a plurality of:
- blocking all calls to said radio communication terminal;
- blocking all calls from said radio communication terminal;
- switching calls for said radio communication terminal to voice mail;
- disable audible call alert signalling for said radio communication terminal;
- enable non-audible call alert signalling for said radio communication terminal.

3. A method according to claim 1 or 2, wherein said selective call transfer status is assignable in accordance with any or a plurality of:
- a temporarily assignment;
- an operator dependent assignment;
- a subscriber dependent assignment.

4. A method according to claim 1, 2 or 3, wherein a selective call transfer status is assigned to said radio communication terminal in accordance with the or part of a selective call transfer status assigned to said base station.

5. A method according to claim 4, wherein said selective call transfer status is assigned to the or each radio communication terminal at the first time that a radio link connection is established between a radio communication terminal and said radio base station.

6. A method according to claim 1, 2, 3, 4 or 5, wherein said selective call transfer status is assigned in a cellular or radio switching equipment or center to which said radio base station connects.

7. A radio base station for use in a cellular and/or cordless radio telecommunication system comprising a plurality of cellular and/or cordless radio communication terminals, said radio base station comprising transceiver means and communication control means, wherein said control means are arranged to execute communications between said radio base station and a radio communication terminal in accordance with the or part of a selective call transfer status assigned to said radio base station.

8. Switching equipment for use with a cellular and/or cordless radio telecommunication system for the connection of radio base stations for radio communication with cellular and/or cordless radio telecommunication terminals, wherein said switching equipment is arranged to execute communications via said switching equipment, a radio base station and radio communication terminal in accordance with the or part of a selective call transfer status assigned to said radio base station.

9. Switching equipment according to claim 8, arranged for assigning a selective call transfer status to a radio base station and/or radio communication terminal connected to said radio base station.

10. A radio communication system operating in accordance with any of the claims 1-6 and comprising radio base station and switching equipment according to any of the claims 7-9, wherein said radio communication system operates in accordance with the Global System for Mobile communication (GSM) standard (including DCS 1800 and PCS 1900) and/or the Digital Enhanced Cordless Telecommunications (DECT) standard and/or the Personal Handyphone System (PHS) standard.
